(19) Europäisches Patentamt
European Patent Office
Office européen des brevets

(11) **EP 2 584 275 B1**

(12) **EUROPÄISCHE PATENTSCHRIFT**

(45) Veröffentlichungstag und Bekanntmachung des Hinweises auf die Patenterteilung:
**07.12.2022 Patentblatt 2022/49**

(21) Anmeldenummer: **12005892.0**

(22) Anmeldetag: **16.08.2012**

(51) Internationale Patentklassifikation (IPC):
**F24F 1/01** (2011.01)　　　**F24F 13/14** (2006.01)

(52) Gemeinsame Patentklassifikation (CPC):
**F24F 1/01; F24F 13/14**

(54) **Lufttechnisches Induktionsgerät sowie Verfahren zur Belüftung und/oder Klimatisierung eines Raumes mit dem Induktionsgerät**

Ventilation induction device and method for venting and/or air conditioning a room with the induction device

Appareil d'aération à induction ainsi que procédé de ventilation et/ou de climatisation d'une pièce avec l'appareil à induction

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2011 DE 102011117091**

(43) Veröffentlichungstag der Anmeldung:
**24.04.2013 Patentblatt 2013/17**

(73) Patentinhaber: **LTG Aktiengesellschaft**
**70435 Stuttgart (DE)**

(72) Erfinder:
• **Wagner, Ralf**
**70771 Leinfelden-Echterdingen (DE)**

• **Kenner, Florian**
**73728 Esslingen (DE)**

(74) Vertreter: **Clarenbach, Carl-Philipp et al**
**Gleiss Große Schrell und Partner mbB**
**Patentanwälte Rechtsanwälte**
**Leitzstraße 45**
**70469 Stuttgart (DE)**

(56) Entgegenhaltungen:
DE-A1- 3 913 306　　　DE-U1- 20 022 731
DE-U1- 20 204 970　　　DE-U1-202011 107 258
GB-A- 1 474 432　　　GB-A- 2 413 378
US-A1- 2002 056 545

## Beschreibung

Die Erfindung betrifft ein lufttechnisches Induktionsgerät zur Belüftung und/oder Klimatisierung eines Raumes eines Gebäudes oder dergleichen, mit einer mit Primärluft gespeisten Induktionseinrichtung, einem aufgrund der Induktionswirkung der Induktionseinrichtung von Sekundärluft durchströmten Wärmetauscher und einer als Luftleitelement ausgebildeten, zumindest einen Anteil der vom Wärmetauscher kommenden Sekundärluft zum Wirkungsbereich der Induktionseinrichtung leitenden Injektoreinrichtung.

Ein lufttechnisches Induktionsgerät der eingangs genannten Art ist bekannt. Durch die der Induktionseinrichtung zugeführten Primärluft wird eine Induktion erzeugt, die Sekundärluft ansaugt. Die angesaugte Sekundärluft durchsetzt einen Wärmetauscher und wird dort erwärmt oder gekühlt. Die in der Temperatur beeinflusste Sekundärluft mischt sich dann mit der die Induktionseinrichtung verlassenden Primärluft und die so gebildete Mischluft wird in einen Raum eines Gebäudes oder dergleichen eingebracht. Bei der Sekundärluft handelt es sich um aus diesem Raum stammende Raumluft. Die Primärluft wird vorzugsweise in einer Luftzentrale des den Raum aufweisenden Gebäudes bereitgestellt und über ein Luftkanalnetz dem Induktionsgerät zugeführt. Zur Erzielung einer möglichst guten Heizbeziehungsweise Kühlleistung des Wärmetauschers weist dieser eine hinreichend große Querschnittsfläche auf, mit der Folge, dass zumindest ein Bereich des Wärmetauschers relativ weit entfernt von dem Wirkungsbereich der Induktionseinrichtung liegt, sodass in diesen Bereich keine oder nur eine nicht hinreichende Durchströmung von Sekundärluft erfolgen würde. Um diese Beeinträchtigung zu beheben, ist es bekannt, eine Injektoreinrichtung vorzusehen, die als Luftleitelement ausgebildet ist und sich auf der geräteinneren Seite des Wärmetauschers, mit Abstand zu diesem befindet. Das Luftleitelement verbessert die Durchströmung des Wärmetauschers in dem genannten Bereich, sodass die gewünschte gute Heiz- beziehungsweise Kühlleistung erzielt wird.

Bei dem sich im Einsatz befindlichen lufttechnischen Induktionsgerät gibt es Betriebszustände, in denen insbesondere aus kalorischen Gründen nur ein geringer oder gar kein Sekundärluftstrom, also nur eine verminderte oder gar keine Behandlung von Raumluft, erfolgen soll. Der aus dem Induktionsgerät ausgeblasene, hohe Gesamtvolumenstrom, der sich aus dem Volumenstrom der Primärluft und dem Volumenstrom der Sekundärluft zusammensetzt, kann in den genannten Betriebszuständen zu sehr hoher Luftgeschwindigkeit in einer Aufenthaltszone des Raumes führen, mit der Folge, dass ein als unangenehm empfundenes Raumklima herrscht.

Die Offenlegungsschrift DE 39 13 306 A1 beschreibt ein lufttechnisches Induktionsgerät mit einer Induktionseinrichtung, einem Wärmetauscher und mehreren verlagerbaren Luftleitelementen.

Der Erfindung liegt die Aufgabe zugrunde, ein lufttechnisches Induktionsgerät der eingangs genannten Art zu schaffen, bei dem der Gesamtvolumenstrom beeinflussbar ist, sodass in der Aufenthaltszone des Raumes ein angenehmes Raumklima herrscht. Dabei soll vorzugsweise kein zusätzlicher Druckverlust im Induktionsgerät auftreten und/oder es soll im Normalbetrieb keine Leistungsminderung erfolgen. Im "Normalbetrieb" wird der Volumenstrom der Sekundärluft nicht beeinflusst. Ferner soll insbesondere keine erhöhte Geräuschentwicklung in den verschiedenen, den Volumenstrom der Sekundärluft beeinflussenden Steuerungs- oder Regelungszuständen auftreten, d.h., es soll ein möglichst geräuscharmer Betrieb, auch bei einem verringerten oder vollständig abgestellten Sekundärluftvolumenstrom, möglich sein.

Diese Aufgabe wird erfindungsgemäß dadurch gelöst, dass das Luftleitelement zum Verengen oder Erweitern des Querschnitts einer stromabwärts der Induktionseinrichtung gelegenen Luftführungszone verlagerbar angeordnet ist. Damit übernimmt das Luftleitelement erfindungsgemäß eine Doppelfunktion, indem es einerseits die Injektoreinrichtung bildet und andererseits - durch Verlagerung - die Luftführungszone im Querschnitt beeinflusst. Diese Querschnittsverengung beziehungsweise -erweiterung (je nach Verlagerungsrichtung des Luftleitelements) führt zum Aufbau oder zum Abbau eines entsprechenden Innenluftdrucks im Induktionsgerät, mit der Folge, dass durch diesen entsprechend aufgebauten Gegendruck die Sekundärluft im Volumenstrom beeinflusst wird. Wird das Luftleitelement in eine Stellung verlagert, in der eine Verengung der Luftführungszone vorliegt, so führt dies zu einem vergrößerten Gegendruck, mit der Folge, dass der durch den Wärmetauscher zuströmende Sekundärluftvolumenstrom abnimmt. Wird hingegen das Luftleitelement derart verlagert, dass sich die Luftführungszone im Querschnitt erweitert, so sinkt der Gegendruck im Innern des Induktionsgeräts, mit der Folge, dass der durch den Wärmetauscher eintretende Sekundärluftvolumenstrom ansteigt. Durch das verlagerbar angeordnete Luftleitelement beziehungsweise die verlagerbar angeordnete Injektoreinrichtung, wird demzufolge auf aerodynamische Weise der Luftdruck im Innern des Geräts, also der erwähnte Gegendruck, beeinflusst, wodurch das sogenannte Induktionsverhältnis i gesteuert beziehungsweise geregelt wird. Das Induktionsverhältnis i ergibt sich zu

$$i = \frac{V_{sek}}{V_{prim}},$$

wobei $V_{sek}$ der Volumenstrom der Sekundärluft und $V_{prim}$ der Volumenstrom der Primärluft ist. Wird der Gegendruck entsprechend weit erhöht, so ist es möglich, das Induktionsverhältnis bis auf den Wert i = 0 zu reduzieren, d.h., in diesem Falle ist der Volumenstrom der Sekundärluft = 0. Ein reduzierter Sekundärluftvolumenstrom beziehungsweise kein Sekundärluftvolumenstrom führt zu einem entsprechend niedrigeren, aus dem Induktionsgerät austretenden und in den Raum des Gebäudes eintretenden Gesamtvolumenstrom, mit der Folge, dass eine entsprechend niedrige Luftgeschwindigkeit in der Aufenthaltszone erzielbar ist. Da erfindungsgemäß die vorstehenden Wirkungen mittels ein und derselben Einrichtung, nämlich der erfindungsgemäß ausgebildeten, verlagerbaren Injektoreinrichtung erzielt wird, ergibt sich ein sehr einfacher Aufbau des Induktionsgeräts, d.h., es sind gegenüber der bekannten Ausführungsformen keine zusätzlichen Teile oder dergleichen erforderlich, sondern es ist lediglich erforderlich, ein an sich bekanntes Element, nämlich die Injektoreinrichtung, verlagerbar auszuführen. Da gegenüber der bekannten Ausführung im Normalbetrieb, also bei nicht reduzierter Sekundärluft, keine konstruktive Änderung beim erfindungsgemäßen Induktionsgerät vorliegt, ist auch kein zusätzlicher Druckverlust und keine Leistungsverminderung gegeben. Ferner führt die erfindungsgemäße Ausgestaltung dazu, dass sich die akustischen Eigenschaften des erfindungsgemäßen Induktionsgerätes in Abhängigkeit der Stellung des Luftleitelements nicht spürbar ändern, sodass eine sehr hohe Akustikqualität besteht.

Nach einer Weiterbildung der Erfindung ist vorgesehen, dass das Luftleitelement verschwenkbar gelagert ist. Die Verlagerbarkeit des Luftleitelements ergibt sich somit vorzugsweise durch seine Verschwenkbarkeit. Insbesondere kann das Luftleitelement klappenartig ausgebildet sein, d.h., es wird nach Art einer Schwenkklappe gelagert, wobei in der einen Schwenkstellung eine Anordnung des Luftleitelements vorliegt, wie sie aus dem Stand der Technik bekannt ist, und in einer anderen Schwenkstellung der Volumenstrom der Sekundärluft gedrosselt, stark gedrosselt oder sogar bis auf Null zurückgeführt ist. Zwischen den beiden Schwenkstellungen (maximaler Volumenstrom und kein Volumenstrom der Sekundärluft) sind selbstverständlich beliebige Zwischenstellungen denkbar, die - in der einen Schwenkrichtung - ein entsprechendes Abnehmen - und in der anderen Schwenkrichtung - ein entsprechendes Zunehmen des Volumenstroms der Sekundärluft mit sich bringen.

Nach einer Weiterbildung der Erfindung ist vorgesehen, dass das Luftleitelement als Luftleitblech ausgebildet ist. Dies führt zu einem sehr einfachen und kostengünstigen Aufbau.

Erfindungsgemäß ist vorgesehen, dass das Luftleitelement mit einem einen Strömungsweg für den Anteil der Sekundärluft bildenden Abstand zum Wärmetauscher liegt. Dieser Abstand erzeugt zwischen dem Luftleitelement und dem Wärmetauscher den Strömungsweg, entlang dem die einen entsprechenden Bereich des Wärmetauschers durchsetzende Sekundärluft strömt, um zu der Mischzone zu gelangen, in der sich die von der Induktionseinrichtung gelieferte Primärluft mit der den gesamten Wärmetauscher durchsetzenden Sekundärluft mischt.

Erfindungsgemäß sieht einen einer Abführung von Primärluft und/oder von aus Primärluft und Sekundärluft gebildeter Mischluft dienenden, stromabwärts von Induktionseinrichtung und Wärmetauscher angeordneten Luftabführkanal vor, der oder dessen Eingang mittels des verlagerbar angeordneten Luftleitelements verengbar oder erweiterbar ist. Durch das Verengen beziehungsweise Erweitern wird auf den Innendruck, also auf den Gegendruck, eingewirkt, der wiederum Einfluss auf den Sekundärluftvolumenstrom nimmt. Der erwähnte Luftabführkanal kann - in Strömungsrichtung betrachtet - stromabwärts der genannten Mischzone liegen oder es ist auch möglich, dass sich die Mischzone bis in den Luftabführkanal hineinerstreckt. Die vorstehend erwähnte Abführung von Primärluft und/oder von aus Primärluft und Sekundärluft gebildeter Mischluft mittels des Luftabführkanals ergibt sich in Abhängigkeit der Verlagerungsstellung der Injektoreinrichtung. Lässt der aufgebaute Gegendruck einen Sekundärvolumenstrom zu, so wird vom Luftabführkanal Mischluft abgeführt. Ist der Gegendruck derart groß, dass keine Sekundärluft in das erfindungsgemäße Induktionsgerät eintritt, so führt der Luftabführkanal nur die von der Induktionseinrichtung gelieferte Primärluft.

Erfindungsgemäß ist vorgesehen, dass das Luftleitelement aus einer Grundstellung in eine Maximalstellung unter Durchlaufen beliebig vieler Zwischenstellungen verlagerbar ist. In der Grundstellung liegt der Normalbetrieb vor, d.h., der durch die Induktionseinrichtung bewirkte Sekundärluftvolumenstrom hat seine maximale Größe, sodass das Induktionsverhältnis i maximal ist. Beim Durchlaufen der Zwischenstellungen bis zur Maximalstellung nimmt das Induktionsverhältnis i entsprechend ab, um in der Maximalstellung vorzugsweise den Wert Null zu erreichen.

Erfindungsgemäß ist vorgesehen, dass das Luftleitelement in seiner Grundstellung in zumindest teilweiser, seitlicher Überlappungsposition zu einem Bereich des Wärmetauschers liegt. Demzufolge liegt das Luftleitelement oder zumindest ein Bereich des Luftleitelements mit Abstand dem erwähnten Bereich des Wärmetauschers seitlich gegenüber, d.h., das Luftleitelement wirkt luftführend auf die Sekundärluft ein, die insbesondere aus dem genannten Bereich des Wärmetauschers austritt. Verlässt das Luftleitelement seine Grundstellung, wird es also in eine der erwähnten Zwischenstellungen oder in die Maximalstellung verlagert, so kann vorzugsweise vorgesehen sein, dass gleichwohl die zumindest teilweise vorhandene, seitliche Überlappungsposition zu dem oder einem Bereich des Wärmetauschers vorliegt, dass also weiterhin eine Injektorwirkung besteht.

Eine Weiterbildung der Erfindung sieht vor, dass das Luftleitelement zwei Endbereiche aufweist, wobei es vorzugsweise an einem Endbereich verschwenkbar gelagert ist und vorzugsweise am anderen Endbereich bogenförmig gekrümmt, insbesondere U- oder V-förmig gekrümmt, verläuft. Die schwenkbare Lagerung des Luftleitelements in dem einen Endbereich führt zur Ausbildung einer "Luftklappe", die zum einen die Luftleitfunktion des Luftleitelements übernimmt (Injektor) und zum anderen dem Verengen oder Erweitern des Querschnittes der Luftführungszone dient (Beeinflussung der Größe des Sekundärluftvolumenstroms). Vorzugsweise liegt die Schwenkachse des Luftleitelements auf Höhe eines Seitenrandes des Wärmetauschers. Der bogenförmig gekrümmt verlaufende Endbereich des Luftleitelements verstärkt einerseits die Injektorwirkung der Injektoreinrichtung, insbesondere dann, wenn die bogenförmige Krümmung dazu führt, dass dieser Endbereich des Luftleitelements näher am Wärmetauscher liegt, als der übrige Bereich des Luftleitelements. Andererseits sorgt die bogenförmige Krümmung des Endbereichs zu günstigen Strömungsverhältnissen, wenn das Luftleitelement seine Grundstellung verlässt und in eine der Zwischenstellungen verbracht wird oder in die Maximalstellung, da dann einerseits gleichwohl die Injektorwirkung vorliegt und überdies auch ein günstiges Strömungsprofil für die in dieser Zone aus der Induktionseinrichtung austretende Primärluft gegeben ist.

Erfindungsgemäß ist vorgesehen, dass das Luftleitelement aus der Grundstellung über die beliebig vielen Zwischenstellungen bis in die Maximalstellung verlagerbar ist, wobei durch Aufbau eines sich von Zwischenstellung zu Zwischenstellung verstärkenden, auf die Sekundärluft wirkenden Gegendrucks in der Maximalstellung vorzugsweise keine Sekundärluft mehr den Wärmetauscher durchströmt und vorzugsweise nur die gesamte Primärluft den Luftabführkanal passiert. Hierauf wurde vorstehend schon näher eingegangen. In der Maximalstellung ist sichergestellt, dass ein hinreichender Passierweg für die Primärluft besteht, dass also der Querschnitt der Luftführungszone nicht derart weit reduziert wird, dass die Primärluft nicht mehr oder nur noch teilweise in den Luftabführkanal eintritt, dafür jedoch den Wärmetauscher "rückwärts", also von der geräteinneren Seite zur geräteäußeren Seite strömt. Diese Betriebsweise ist durch die gewählte, nicht überschreitbare Maximalstellung des Luftleitelements verhindert.

Eine Weiterbildung der Erfindung sieht vor, dass der Luftabführkanal mit einer Kanalseitenwand in eine Kammerwand übergeht, insbesondere geradlinig übergeht, die zumindest eine Begrenzung einer Mischkammer zur Mischung von Primärluft und Sekundärluft bildet. Hierbei handelt es sich vorzugsweise um eine Kanalseitenwand beziehungsweise Kammerwand, die dem Luftleitelement nicht unmittelbar zugeordnet, sondern abgewandt von diesem liegt. Mittels einer vorzugsweise geradlinig geführten Gehäusewand, insbesondere Rückwand des Gehäuses, kann somit die Kanalseitenwand und auch die Kammerwand gemeinsam gebildet werden.

Insbesondere kann vorgesehen sein, dass die Induktionseinrichtung einen mit der Primärluft gespeisten Luftverteilkasten aufweist, der mit einer Vielzahl von Induktionsdüsen strömungstechnisch verbunden ist. Insbesondere sind die Induktionsdüsen an einer Wandung des Luftverteilkastens befestigt. Die in den Luftverteilkasten eintretende Primärluft (vorzugsweise Außenluft, insbesondere aufbereitete (zum Beispiel in der Feuchte eingestellte) Außenluft) strömt zu den Induktionsdüsen, tritt aus diesen aus, wodurch die Induktionswirkung der Induktionseinrichtung bewirkt wird und strömt dann in Richtung auf den Luftabführkanal. Durch die Induktionswirkung wird die Sekundärluft (Raumluft) angesaugt, die sich mit der Primärluft mischt, sodass die das Induktionsgerät verlassende Mischluft in den Raum des Gebäudes gelangen kann.

Die Anordnung ist vorzugsweise derart getroffen, dass eine Sekundärluftaustrittsfläche des Wärmetauschers seitlich zu den Induktionsdüsen liegt. Mithin weist die Luftaustrittsrichtung der Induktionsdüsen in eine Richtung die parallel zur Sekundärluftaustrittsfläche verläuft.

Es ist - nach einer Weiterbildung der Erfindung - vorteilhaft, wenn das Luftleitelement in Grundstellung parallel, oder etwa parallel, beabstandet zur Sekundärluftaustrittsfläche des Wärmetauschers verläuft. Bei dieser Parallelstellung oder etwa Parallelstellung ist nicht der gekrümmt ausgebildete Endbereich berücksichtigt, sondern die übrige Fläche des Luftleitelements, die vorzugsweise eben gestaltet ist.

Eine Weiterbildung der Erfindung sieht vor, dass in Maximalstellung einer der Endbereiche des Luftleitelements in Richtung oder etwa in Richtung auf die Induktionsdüsen weist und/oder sich - in Strömungsrichtung der aus den Induktionsdüsen austretenden Primärluft gesehen - vor zumindest einigen der Induktionsdüsen befindet. Diese Anordnung führt zu sehr guten Ergebnissen bei der Einstellung des Induktionsverhältnisses i.

Schließlich betrifft die Erfindung ein Verfahren zur Belüftung und/oder Klimatisierung eines Raumes eines Gebäudes oder dergleichen, unter Verwendung des erfindungsgemäßen lufttechnischen Geräts, insbesondere gemäß mindestens einer der vorstehend erwähnten Ausführungsmöglichkeiten des Induktionsgeräts, wobei das Induktionsgerät eine mit Primärluft gespeiste Induktionseinrichtung, einen aufgrund der Induktionswirkung der Induktionseinrichtung von Sekundärluft durchströmten Wärmetauscher und eine als Luftleitelement ausgebildete, zumindest einen Anteil der vom Wärmetauscher kommenden Sekundärluft zum Wirkungsbereich der Induktionseinrichtung leitende Injektoreinrichtung aufweist, wobei mittels Verlagern des Luftleitelements eine stromabwärts der Induktionseinrichtung gelegene Luftführungszone im Querschnitt verengt oder erweitert wird.

Die Zeichnungen veranschaulichen die Erfindung anhand eines Ausführungsbeispiels und zwar zeigt:

Figur 1    eine schematische Längsschnittansicht durch ein lufttechnisches Induktionsgerät, dessen Luftleitelement eine Grundstellung einnimmt,

Figur 2    die Anordnung der Figur 1, wobei sich das Luftleitelement jedoch in einer Zwischenstellung befindet,

Figur 3    die Anordnung der Figur 1, wobei sich das Luftleitelement in einer Maximalstellung befindet und

Figur 4    eine Anordnung gemäß Figur 1, wobei das Luftleitelement eine nicht zulässige Stellung einnimmt, welche außerhalb des üblichen Betriebsbereichs des Induktionsgeräts liegt.

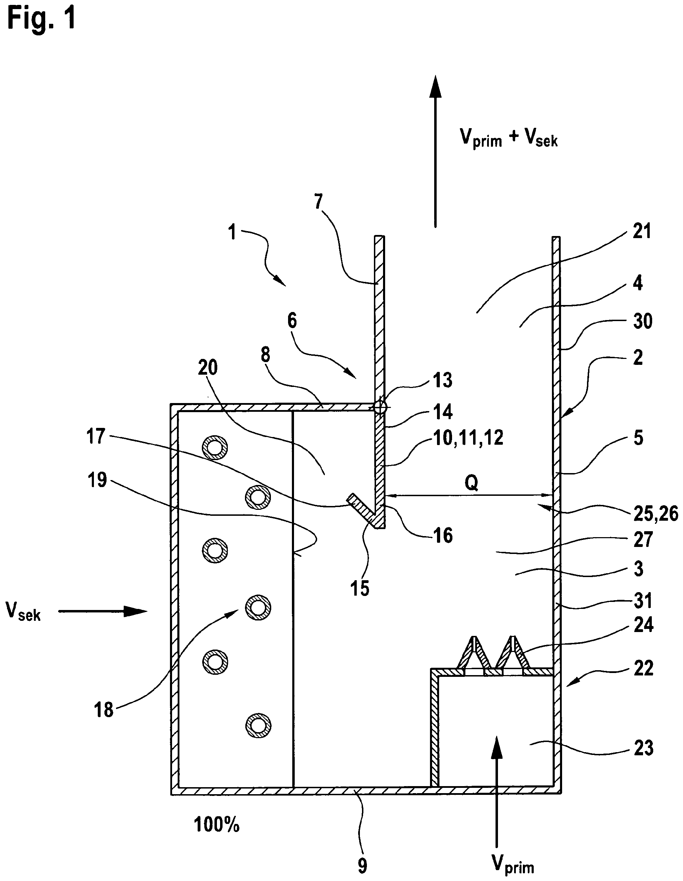

Die Figur 1 zeigt ein lufttechnisches Induktionsgerät 1, das in einem nicht dargestellten Raum eines Gebäudes oder dergleichen aufgestellt ist und der Belüftung und/oder Klimatisierung des Raumes dient.

Das Induktionsgerät 1 weist ein Gehäuse 2 auf, das einen im Grundriss größeren Grundraum 3 und einen im Grundriss kleineren Hals 4 aufweist. Eine Rückwand 5, die vertikal verläuft und eben ausgebildet ist, gehört zum Hals 4 und zum Grundraum 3 und verbindet Hals 4 und Grundraum 3. Aufgrund der unterschiedlich großen Grundrisse von Grundraum 3 und Hals 4 gehen diese beiden Gehäusebereiche des Gehäuses 2 auf der der Rückwand 5 gegenüberliegenden Seite durch Ausbildung einer Eckzone 6 ineinander über. Die Eckzone 6 gehört einerseits zu einer vertikalen Kanalwand 7 und andererseits zu einer horizontalen Raumwand 8. Der Grundraum 3 besitzt eine Bodenwand 9. Ferner weist das Gehäuse 2 zwei parallel zur Zeichnungsebene verlaufende, mit Abstand zueinander liegende Seitenwände auf, die aufgrund der Längsschnittdarstellungen der Figuren 1 bis 4 aus diesen nicht ersichtlich sind.

Innerhalb des Gehäuses 2 befindet sich eine Injektoreinrichtung 10, die als Luftleitelement 11 ausgebildet ist und vorzugsweise als Luftleitblech 12 realisiert ist. Das Luftleitelement 11 ist verlagerbar angeordnet. Die Verlagerbarkeit ergibt sich durch eine Schwenkachse 13, um die das Luftleitelement 11 verschwenkbar gelagert ist. Die Schwenkachse 13 befindet sich in der Ecke der Eckzone 6. Das Luftleitelement 11 weist zwei Endbereiche 14 und 15 auf, wobei es an dem Endbereich 14 verschwenkbar um die Schwenkachse 13 gelagert ist und am anderen Endbereich 15 bogenförmig gekrümmt ist, insbesondere V-förmig verläuft. Betrachtet man nicht den bogenförmigen Endbereich 15, so ist das Luftleitelement 11 eben, insbesondere als ebenes Blech 16, ausgebildet, das zur Ausbildung des Endbereichs 15 eine abgeknickte Zunge 17 aufweist, die in Richtung auf einen Wärmetauscher 18 weist, der sich zwischen der Bodenwand 9 und der Raumwand 8 sowie den in den Zeichnungen nicht ersichtlichen Seitenwänden erstreckt. Der Wärmetauscher 18 ist an einen nicht dargestellten Wasserkreislauf angeschlossen, in dem gekühltes oder erwärmtes Wasser zugeführt wird, je nach dem, ob mit dem Induktionsgerät 1 Raumluft, nämlich Sekundärluft, die den Wärmetauscher 18 durchströmt, erwärmt oder gekühlt werden soll.

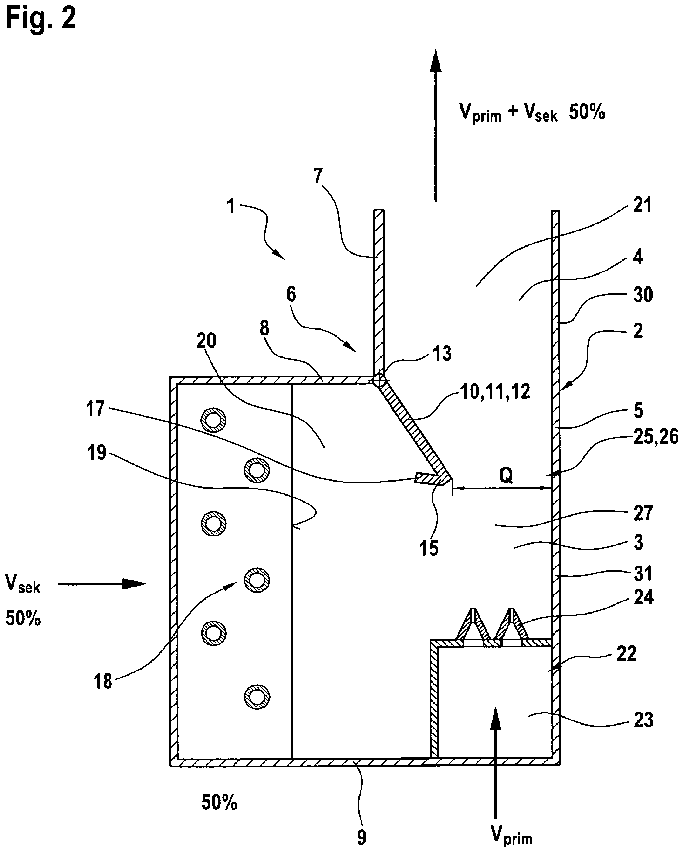

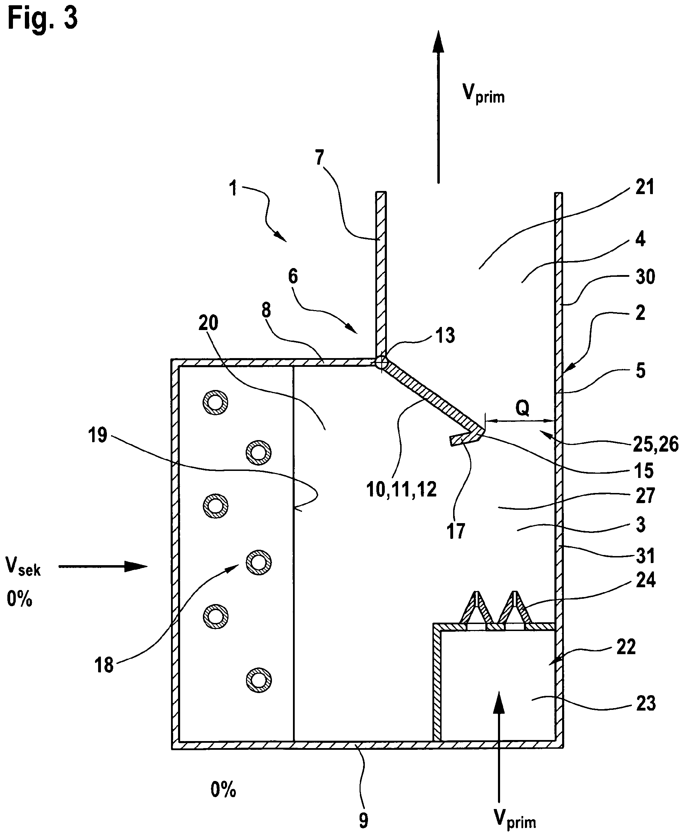

Wie aus der Figur 1 ersichtlich, verlängert das Luftleitelement 11 die Kanalwand 7 geradlinig, wobei die Kanalwand 7 fluchtend in das ebene Blech 16 übergeht. Dies entspricht der Grundstellung des Luftleitelements 11, wie sie aus der Figur 1 hervorgeht. Betrachtet man die Anordnung des Wärmetauschers 18 in Relation zum Luftleitelement 11, so wird deutlich, dass sich diese beiden mit Abstand zueinander liegenden Bauteile seitlich überlappen, d.h., das Luftleitelement 11 weist in der aus der Figur 1 hervorgehenden Grundstellung eine seitliche Überlappungsposition zu einem entsprechenden Bereich des Wärmetauschers 18 auf. Diese Überlappungsposition bleibt auch in den Figuren 2 und 3 erhalten, wenngleich in diesen Figuren das Luftleitelement 11 verschwenkt wird, worauf nachstehend noch näher eingegangen wird. Das Luftleitelement 11 verläuft in der Grundstellung der Figur 1 parallel oder etwa parallel beabstandet zu einer Sekundärluftaustrittsfläche 19 des Wärmetauschers 18, wobei zwischen dem Luftleitelement 11 und der Sekundärluftaustrittsfläche 19 ein Strömungsweg 20 für diejenige Sekundärluft ausgebildet wird, die in dieser Zone den Wärmetauscher 18 durchströmt. Diese Strömungswegausbildung mittels des als Luftleitelements 11 ausgebildeten Injektoreinrichtung 10 verbessert die Durchströmung des Wärmetauschers 18 in dieser Zone.

Der Hals 4 bildet zusammen mit dem Luftleitelement 11 und einem entsprechenden Abschnitt der Rückwand 5 einen Luftabführkanal 21. Dieser wird im Einzelnen von der Kanalwand 7, dem Luftleitelement 11 und einem entsprechenden Bereich der Rückwand 5 sowie entsprechenden Bereichen der nicht dargestellten Seitenwände gebildet. Im Innern des Grundraums 3, und zwar im Eckbereich von Rückwand 5 und Bodenwand 9 befindet sich eine Induktionseinrichtung 22, die einen Luftverteilkasten 23 und eine Vielzahl von Induktionsdüsen 24 aufweist, die strömungstechnisch mit dem Luftverteilkasten 23 verbunden, insbesondere am Luftverteilkasten 23 befestigt, sind. Der Luftverteilkasten 23 weist einen seitlichen Abstand zum Wärmetauscher 18 auf. Vorzugsweise ist die Breite des Luftverteilkastens 23 etwa ebenso groß wie oder etwas kleiner - wie in Figur 1 ersichtlich - als die Breite des Luftabführkanals 21. Die Luftaustrittsrichtungen der Induktionsdüsen 24 sind in Längserstreckung des Luftabführkanals 21 ausgerichtet, d.h., die mit Abstand zum Eingang 25 des Luftabführkanals 21 liegenden Induktionsdüsen 24 blasen in diesen hinein. Der Eingang 25 ist zwischen dem Endbereich 15 des Luftleitelements 11 und einer insbesondere horizontal gegenüberliegenden Zone der Rückwand 5 und entsprechend gelegenen Zonen an den nicht dargestellten Seitenwänden gebildet. Gespeist wird der Luftverteilkasten 23 mit Primärluft, die vorzugsweise in einer Luftzentrale des Gebäudes aufbereitet wird und über ein Verteilnetz dem Induktionsgerät 1 zugeführt wird.

Wenn im Zuge dieser Anmeldung zum Beispiel von einem senkrechten beziehungsweise waagerechten Verlauf oder beispielsweise von einer Bodenwand gesprochen wird, dann bedeutet das nicht, dass nur die erwähnte Anordnung gilt, sondern diese gibt nur die Aufstellungslage des Induktionsgeräts 1 gemäß der Figuren 1 bis 4 wieder. Es ist jedoch auch denkbar, dass eine andere Aufstellungslage gewählt wird, beispielsweise nicht aufrecht stehend, sondern liegend und so weiter. Auch diese Varianten sind von der Erfindung erfasst und die gewählten Bezeichnungen daher entsprechend anzupassen.

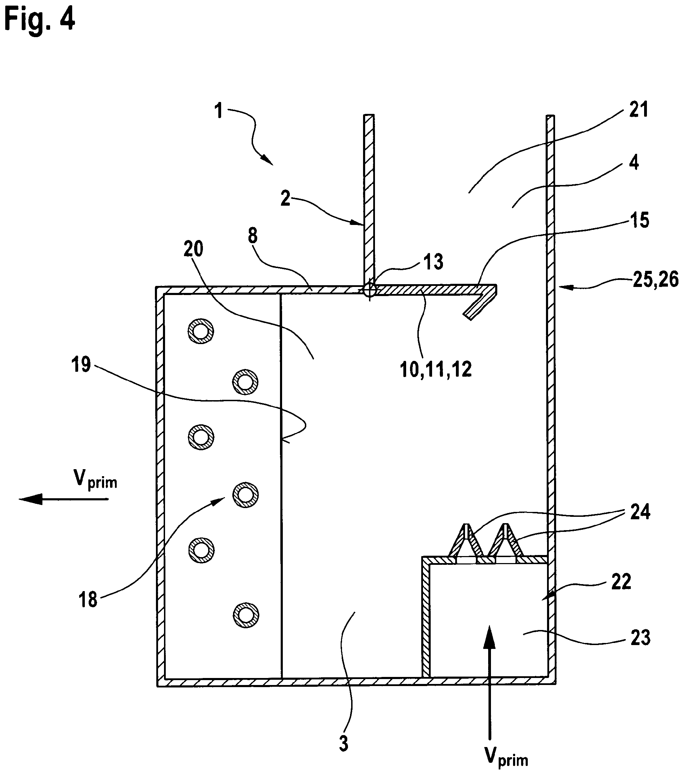

Vergleicht man die Figuren 1 und 2, so ist ersichtlich, dass das Luftleitelement 11, also die Injektoreinrichtung 10, um die Schwenkachse 13 nach rechts verschwenkt worden ist. Wie erwähnt, weist das Luftleitelement 11 in der Figur 1 seine Grundstellung auf. In der Figur 2 ist es in eine Zwischenstellung verschwenkt. In der Figur 1 weist das freie Ende (Endbereich 15) in Richtung auf die Bodenwand 9 und zwar im Bereich zwischen dem Luftverteilkasten 23 und dem Wärmetauscher 18. In der Figur 2 weist das freie Ende des Luftverteilelements 11 in Richtung auf die Induktionsdüsen 24. Die Figur 3 zeigt eine weitere Stellung des Luftleitelements 21, und zwar ist es bis in eine Maximalstellung verschwenkt, die nicht überschritten werden soll, weil dies zu unzulässigen Stellungen des Luftleitelements 11 führen würde, wie beispielsweise aus der Figur 4 ersichtlich. Hierauf wird noch näher eingegangen. Gemäß der Figuren 1 bis 3 lässt sich demzufolge das Luftleitelement 11 schwenkend verlagern, wobei beliebig viele Zwischenstellungen zwischen der Grundstellung gemäß Figur 1 und der Maximalstellung der Figur 3 möglich sind. Durch das Verlagern, insbesondere Verschwenken, des Luftleitelements 11 wird der Querschnitt Q einer stromabwärts der Induktionseinrichtung 22 gelegenen Luftführungszone 26 verengt beziehungsweise erweitert (das Erweitern erfolgt, wenn das Luftleitelement 11 wieder zurückgeschwenkt wird). Der Querschnitt Q der Luftführungszone 26, der dem Querschnitt des Eingangs 25 des Luftabführkanals 21 entspricht, wird in Abhängigkeit der Verlagerungsstellung des Luftleitelements 11 eingestellt. Diese Einstellung erfolgt mittels einer nicht dargestellten Steuer- oder Regeleinrichtung des Induktionsgeräts 1, die ferner - je nach Ausführungsform - auch den Volumenstrom der Primärluft und/oder den Volumenstrom des Heiz- oder Kühlwassers des Wärmetauschers 18 steuern oder regeln kann.

Es wird davon ausgegangen, dass sich zunächst das Luftleitelement 11 in seiner Grundstellung gemäß Figur 1 befindet. Der Luftverteilkasten 23 wird mit Primärluft gespeist. Das bedeutet, dass ein entsprechender Volumenstrom $V_{prim}$ in den Luftverteilkasten 23 eintritt und aus den Induktionsdüsen 24 in das Innere des Gehäuses 2 des Induktionsgeräts 1 ausströmt. Hierdurch wird eine Induktionswirkung erzielt, die dazu führt, dass aus dem Raum Raumluft, nämlich Sekundärluft, angesaugt wird, welcher als Sekundärluftvolumenstrom $V_{sek}$ den Wärmetauscher 18 durchsetzt, dort temperaturbehandelt wird (sofern dies erfolgen soll; erfolgt es nicht, so arbeitet das Induktionsgerät 1 im Lüftungsbetrieb) und strömt dann in Richtung auf eine stromab der Induktionsdüsen 24 gelegene Mischkammer 27, in der sich Primärluft und Sekundärluft vermischen. Die so gebildete Mischluft durchströmt den Luftabführkanal 21 und tritt aus diesem in den zu belüftenden beziehungsweise zu klimatisierenden Raum ein. Demselben Raum wurde die den Wärmetauscher 18 durchsetzende Sekundärluft entnommen. Mithin tritt in den Raum ein Gesamtvolumenstrom ein, der sich aus dem Volumenstrom $V_{prim}$ der Primärluft und dem Volumenstrom $V_{sek}$ der Sekundärluft additiv zusammensetzt. Das lufttechnische Induktionsgerät 1 weist ein sogenanntes Induktionsverhältnis i auf, das sich aus der Beziehung

$$ i = \frac{V_{sek}}{V_{prim}} , $$

ergibt. Aufgrund der Überlappungsposition des Luftleitelements 11 zum oberen Bereich des Wärmetauschers 18 und der dadurch erfolgenden Ausbildung des Strömungswegs 20 ist auch der relativ weit von der Mischkammer 27 entfernt liegende Bereich des Wärmetauschers 18 genutzt, da auch dort aufgrund der Injektorwirkung des Luftleitelements 11 eine hinreichende Durchströmung erfolgt. Gemäß Figur 1 wird davon ausgegangen, dass in der Grundstellung des Luftleitelements 11 ein Sekundärluftvolumenstrom durch die Induktionswirkung erzeugt wird, der den Wert 100 % hat. Den Figuren 1 bis 4 ist zu entnehmen, dass der Luftabführkanal 21 mit einer Kanalseitenwand 30 in eine Kammerwand 31 der Mischkammer 27 geradlinig übergeht. Kanalseitenwand 30 und Kammerwand 31 sind Abschnitte der Rückwand 5.

Da aus dem Induktionsgerät 1 ein Gesamtvolumenstrom austritt, der sich aus dem Volumenstrom der Primärluft und dem Volumenstrom der Sekundärluft zusammensetzt, kann es in bestimmten Betriebszuständen zu einer zu hohen Luftgeschwindigkeit in einer Aufenthaltszone des Raumes kommen. Um dies zu verhindern, wird das Luftleitelement 11 in eine Zwischenstellung, zum Beispiel gemäß Figur 2, verbracht. Hierzu ist ein entsprechender, nicht dargestellter Antrieb vorgesehen, der von der Steuer- oder Regeleinrichtung betätigt wird. Dies führt dazu, dass sich aufgrund der Verengung des Querschnitts Q der Luftführungszone 26 ein Gegendruck im Innern des Gehäuses 2 des Induktionsgeräts 1 aufbaut, der der einströmenden Sekundärluft entgegenwirkt und dazu führt, dass sich der Volumenstrom der Sekundärluft verkleinert, beispielsweise auf 50 %, so wie dies im Beispiel der Figur 2 angenommen wird. Mithin tritt aus dem Induktionsgerät 1 gemäß Zwischenstellung der Figur 2 nur ein Gesamtvolumenstrom aus, der sich aus dem Volumenstrom der Primärluft und einem um 50 % verkleinerten Volumenstrom der Sekundärluft zusammensetzt.

Soll der Gesamtvolumenstrom noch weiter verkleinert werden und ist insbesondere eine kalorische Behandlung der Raumluft nicht erforderlich, so wird das Luftleitelement 11 gemäß Figur 3 in seine Maximalstellung verlagert, in der die Luftführungszone 26 maximal verengt ist, mit der Folge, dass der Gegendruck noch weiter ansteigt und so groß wird, dass gar keine Sekundärluft mehr den Wärmetauscher 18 passiert, sodass der Volumenstrom der Sekundärluft somit auf 0 % absinkt. Aus dem Luftabführkanal 21 tritt dann nur noch der Volumenstrom der Primärluft in den Raum ein.

Die Figur 4 zeigt - lediglich zum Verständnis - eine zumeist nicht gewünschte Betriebssituation des lufttechnischen Induktionsgeräts 1. Diese tritt dadurch auf, dass das Luftleitelement 11 über die Maximalstellung hinaus noch weiter verschwenkt wurde, sodass der Querschnitt Q der Luftführungszone 26 unzulässig weit verengt wurde, mit der Folge, dass der Gegendruck so groß wird, dass die Primärluft zumindest zum Teil rückwärts den Wärmetauscher 11 durchströmt und auf diese Art und Weise in den Raum eintritt. Eine derartige Betriebsführung ist normalerweise jedoch vorzugsweise unzulässig.

Soll vom Zustand gemäß Figur 3 wieder in der Zustand gemäß Figur 2 oder Figur 1 übergegangen werden, so ist es lediglich erforderlich, dass die nicht dargestellt Steuer- oder Regeleinrichtung des Induktionsgeräts 1 mittels des Antriebs das Luftleitelement 11 nach links rückverschwenkt.

Da gemäß der vorstehend erwähnten Formel für das Induktionsverhältnis i bei einer Reduzierung des Volumenstroms der Sekundärluft und konstant bleibenden Volumenstrom der Primärluft sich das Ergebnis des Bruchs der Formel verkleinert, ist erkennbar, dass gemäß Figur 3 das Induktionsverhältnis i = 0 ist, d.h., das Induktionsverhältnis wird - ausgehend von der Figur 1 - entsprechend bis auf den Wert 0 reduziert.

Aufgrund des erfindungsgemäßen Vorgehens wird die erwähnte Injektoreinrichtung 10, also das teilweise Überlappen des Wärmetauschers 18 mittels des Luftleitelements 11 und der Ausbildung des Strömungswegs 20, erfindungsgemäß als verlagerbares Element, insbesondere als Klappe, also verschwenkbares Luftleitelement 11, ausgeführt, wodurch durch die Verengung des Querschnitts Q der Luftführungszone 26 auf aerodynamische Weise ein Gegendruck erzeugt wird, was als Ergebnis zu einer Verminderung des Induktionsverhältnisses des Induktionsgeräts 1 führt. Auf diese Art und Weise ist es möglich, in Abhängigkeit von verschiedenen Betriebssituationen, stets eine sehr angenehme Klimasituation in der Aufenthaltszone des Raumes zu schaffen, in dem das Induktionsgerät 1 aufgestellt ist. Gleichzeitig führt die erfindungsgemäße Ausbildung zu einem sehr leise arbeitenden Induktionsgerät 1, unabhängig von den jeweils vorliegenden Stellungen des Luftleitelements 11. Da auch bei einer aus der Grundstellung heraus verlagerten Stellung des Luftleitelements 11 gleichwohl ein Strömungsweg 20 geschaffen ist, bleibt eine Injektionswirkung der Injektoreinrichtung 10 auch in den Zwischenstellungen und in der Maximalstellung des Luftleitelements 11 aufrechterhalten und gleichzeitig ist durch die Verlagerbarkeit ein und desselben Bauteils, nämlich der Injektoreinrichtung 10, die Steuer- und/oder Regelmöglichkeit der Größe des Sekundärluftvolumenstroms gegeben.

**Patentansprüche**

1. Lufttechnisches Induktionsgerät (1) zur Belüftung und/oder Klimatisierung eines Raumes eines Gebäudes oder dergleichen, mit einer mit Primärluft gespeisten Induktionseinrichtung, einem aufgrund der Induktionswirkung der Induktionseinrichtung von Sekundärluft durchströmten Wärmetauscher (18) und einer als Luftleitelement (11) ausgebildeten, zumindest einen Anteil der vom Wärmetauscher (18) kommenden Sekundärluft zum Wirkungsbereich der Induktionseinrichtung leitenden Injektoreinrichtung (10), wobei das Luftleitelement (11) zum Verengen oder Erweitern des Querschnitts einer stromabwärts der Induktionseinrichtung gelegenen Luftführungszone verlagerbar angeordnet ist, wobei ein einer Abführung von Primärluft und/oder von aus Primärluft und Sekundärluft gebildeter Mischluft dienender, stromabwärts von der Induktionseinrichtung (22) und dem Wärmetauscher (18) angeordneter Luftabführkanal (21) vorgesehen ist, dessen den Querschnitt (Q) aufweisender Eingang (25) mittels des verlagerbar angeordneten Luftleitelements (11) verengbar oder erweiterbar ist, und wobei das Luftleitelement (11) aus einer Grundstellung über beliebig viele Zwischenstellungen bis in eine Maximalstellung verlagerbar ist, **dadurch gekennzeichnet, dass** durch Aufbau eines sich von Zwischenstellung zu Zwischenstellung verstärkenden, auf die Sekundärluft wirkenden Gegendrucks in der Maximalstellung keine Sekundärluft mehr den Wärmetauscher (18) durchströmt und nur die gesamte Primärluft den Luftabführkanal (21) passiert, wobei das Luftleitelement (11) mit einem einen Strömungsweg (20) für den Anteil der Sekundärluft bildenden Abstand zum Wärmetauscher (18) liegt und in seiner Grundstellung in zumindest teilweiser, seitlicher Überlappungsposition zu einem Bereich des Wärmetauschers (18) liegt, wobei in der Grundstellung des Luftleitelements (11) ein Sekundärluftvolumenstrom durch den Wärmetauscher (18) einen Wert von 100 %, in einer Zwischenstellung einen Wert von 50 % und in der Maximalstellung einen Wert von 0 aufweist.

2. Induktionsgerät nach Anspruch 1, **dadurch gekennzeichnet, dass** das Luftleitelement (11) verschwenkbar gelagert ist.

3. Induktionsgerät nach einem der vorhergehenden Ansprüche, **dadurch gekennzeichnet, dass** das Luftleitelement (11) als Luftleitblech (12) ausgebildet ist.

4. Induktionsgerät nach einem der vorhergehenden Ansprüche, **dadurch gekennzeichnet, dass** das Luftleitelement (11) einen Bereich eines anfangsseitigen Abschnitt des Luftabführkanals (21) bildet.

5. Induktionsgerät nach einem der vorhergehenden Ansprüche, **dadurch gekennzeichnet, dass** das Luftleitelement (11) zwei Endbereiche (14,15) aufweist, wobei es vorzugsweise an einem Endbereich (14) verschwenkbar gelagert ist und vorzugsweise am anderen Endbereich (15) bogenförmig gekrümmt, insbesondere U- oder V-förmig gekrümmt, verläuft.

6. Induktionsgerät nach einem der vorhergehenden Ansprüche, **dadurch gekennzeichnet, dass** der Luftabführkanal (21) mit einer Kanalseitenwand in eine Kammerwand übergeht, insbesondere geradlinig übergeht, die zumindest eine Begrenzung einer Mischkammer (27) zur Mischung von Primärluft und Sekundärluft bildet.

7. Induktionsgerät nach einem der vorhergehenden Ansprüche, **dadurch gekennzeichnet, dass** die Induktionseinrichtung (22) einen mit der Primärluft gespeisten Luftverteilkasten (23) aufweist, der mit einer Vielzahl von Induktionsdüsen (24) strömungstechnisch verbunden ist.

8. Induktionsgerät nach einem der vorhergehenden Ansprüche, **dadurch gekennzeichnet, dass** eine Sekundärluftaustrittsfläche (19) des Wärmetauschers (18) seitlich zu den Induktionsdüsen (24) liegt.

9. Induktionsgerät nach einem der vorhergehenden Ansprüche, **dadurch gekennzeichnet, dass** das Luftleitelement (11) in Grundstellung parallel, oder etwa parallel, beabstandet zur Sekundärluftaustrittsfläche (19) des Wärmetauschers (18) verläuft.

10. Induktionsgerät nach einem der vorhergehenden Ansprüche, **dadurch gekennzeichnet, dass** in Maximalstellung einer der Endbereiche (15) des Luftleitelements (11) in Richtung oder etwa in Richtung auf die Induktionsdüsen (24) weist und/oder sich - in Strömungsrichtung der aus den Induktionsdüsen (24) austretenden Primärluft gesehen - vor zumindest einigen der Induktionsdüsen (24) befindet.

11. Verfahren zur Belüftung und/oder Klimatisierung eines Raumes eines Gebäudes oder dergleichen, unter Verwendung eines lufttechnischen Induktionsgeräts gemäß einem der vorhergehenden Ansprüche, **dadurch gekennzeichnet, dass** mittels Verlagern des Luftleitelements (11) die stromabwärts der Induktionseinrichtung (22) gelegene Luftführungszone (26) im Querschnitt (Q) verengt oder erweitert wird.

**Claims**

1. Ventilation induction device (1) for venting and/or air conditioning a room of a building or the like, comprising an induction device supplied with primary air, a heat exchanger (18) through which secondary air flows due to the induction effect of the induction device, and an injector device (10) designed as an air guide element (11) and guiding at least a portion of the secondary air coming from the heat exchanger (18) to the effective range of the induction device, wherein the air guide element (11) is displaceably arranged for narrowing or widening the cross-section of an air guide zone located downstream of the induction device, wherein an air discharge duct (21) serving to discharge primary air and/or mixed air formed from primary air and secondary air is arranged downstream of the induction device (22) and the heat exchanger (18), whose inlet (25) having the cross-section (Q) can be narrowed or widened by means of the displaceably arranged air guide element (11), and wherein the air guide element (11) is displaceable from a basic position via any number of intermediate positions into a maximum position, **characterized in that,** by building up a counterpressure which increases from intermediate position to intermediate position and acts on the secondary air, no secondary air flows through the heat exchanger (18) any more in the maximum position and only the entire primary air passes through the air discharge duct (21), wherein the air guide element (11) lies at a distance from the heat exchanger (18) forming a flow path (20) for the portion of secondary air and in its basic position lies in an at least partial, lateral overlapping position with a region of the heat exchanger (18), wherein in the basic position of the air guide element (11) a secondary air volume flow through the heat exchanger (18) has a value of 100%, in an intermediate position has a value of 50% and in the maximum position has a value of 0.

2. Induction device according to claim 1, **characterized in that** the air guide element (11) is pivotably mounted.

3. Induction device according to one of the preceding claims, **characterized in that** the air guide element (11) is designed as an air guide plate (12).

4. Induction device according to one of the preceding claims, **characterized in that** the air guide element (11) forms a region of an initial-side section of the air discharge duct (21).

**5.** Induction device according to one of the preceding claims, **characterized in that** the air guide element (11) has two end regions (14, 15), preferably being pivotably mounted at one end region (14) and preferably extending at the other end region (15) in an arcuately curved manner, in particular in a U-shaped or V-shaped curved manner.

**6.** Induction device according to one of the preceding claims, **characterized in that** the air discharge duct (21) merges, in particular merges rectilinearly, with a duct side wall into a chamber wall, which forms at least one boundary of a mixing chamber (27) for mixing primary air and secondary air.

**7.** Induction device according to one of the preceding claims, **characterized in that** the induction device (22) comprises an air distribution box (23) supplied with primary air and fluidically connected to a plurality of induction nozzles (24).

**8.** Induction device according to one of the preceding claims, **characterized in that** a secondary air outlet surface (19) of the heat exchanger (18) is located laterally to the induction nozzles (24).

**9.** Induction device according to one of the preceding claims, **characterized in that** the air guide element (11) in the basic position extends parallel, or approximately parallel, at a distance from the secondary air outlet surface (19) of the heat exchanger (18).

**10.** Induction device according to one of the preceding claims, **characterized in that,** in the maximum position, one of the end regions (15) of the air guide element (11) points in the direction of, or approximately in the direction of, the induction nozzles (24) and/or is located in front of at least some of the induction nozzles (24), as seen in the direction of flow of the primary air emerging from the induction nozzles (24).

**11.** Method for venting and/or air conditioning a room of a building or the like, using a ventilation induction device according to one of the preceding claims, **characterized in that** by means of displacing the air guide element (11) the air guide zone (26) located downstream of the induction device (22) is narrowed or widened in cross-section (Q).

**Revendications**

**1.** Appareil à induction d'air (1) pour la ventilation et/ou la climatisation d'une pièce d'un bâtiment ou similaire, avec un dispositif d'induction alimenté en air primaire, un échangeur de chaleur (18) traversé par de l'air secondaire en raison de l'effet d'induction du dispositif d'induction, et un dispositif d'injection (10) réalisé comme élément de guidage d'air (11) et guidant au moins une partie de l'air secondaire provenant de l'échangeur de chaleur (18) vers la zone d'effet du dispositif d'induction, l'élément de guidage d'air (11) étant disposé de manière à pouvoir être déplacé pour rétrécir ou élargir la section transversale d'une zone de guidage d'air située en aval du dispositif d'induction, un canal d'évacuation d'air (21) servant à l'évacuation d'air primaire et/ou d'air mixte formé d'air primaire et d'air secondaire, étant prévu en aval du dispositif d'induction (22) et de l'échangeur de chaleur (18), dont l'entrée (25) présentant la section transversale (Q) peut être rétrécie ou élargie au moyen de l'élément de guidage d'air (11), disposé de manière déplaçable, et dans lequel l'élément de guidage d'air (11) peut être déplacé d'une position de base à une position maximale en passant par un nombre quelconque de positions intermédiaires, **caractérisé en ce que**, par l'établissement d'une contre-pression qui s'intensifie de position intermédiaire en position intermédiaire et qui agit sur l'air secondaire, plus aucun air secondaire ne traverse l'échangeur de chaleur (18) dans la position maximale et seul l'air primaire total passe par le canal d'évacuation d'air (21), l'élément de guidage d'air (11) étant situé à une distance de l'échangeur de chaleur (18) formant un trajet d'écoulement (20) pour la partie d'air secondaire et étant situé dans sa position de base dans une position de chevauchement latéral au moins partiel par rapport à une zone de l'échangeur de chaleur (18), un débit volumique d'air secondaire à travers l'échangeur de chaleur (18) présentant une valeur de 100 % dans la position de base de l'élément de guidage d'air (11), une valeur de 50 % dans une position intermédiaire et une valeur de 0 dans la position maximale.

**2.** Appareil à induction selon la revendication 1, **caractérisé en ce que** l'élément de guidage d'air (11) est monté de manière pivotante.

**3.** Appareil à induction selon l'une des revendications précédentes, **caractérisé en ce que** l'élément de guidage d'air (11) est conçu comme un déflecteur d'air (12).

**4.** Appareil à induction selon l'une des revendications précédentes, **caractérisé en ce que** l'élément de guidage d'air (11) forme une zone d'une section initiale du canal d'évacuation d'air (21).

**5.** Appareil à induction selon l'une des revendications précédentes, **caractérisé en ce que** l'élément de guidage d'air (11) présente deux zones d'extrémité (14, 15), l'élément étant de préférence monté de manière pivotante sur une zone d'extrémité (14) et s'étendant de préférence sur l'autre zone d'extrémité (15) avec une courbure en forme d'arc, en particulier une courbure en forme de U ou de V.

6. Appareil à induction selon l'une des revendications précédentes, **caractérisé en ce que** le canal d'évacuation d'air (21) se prolonge par une paroi latérale de canal dans une paroi de chambre, en particulier en ligne droite, qui forme au moins une limite d'une chambre de mélange (27) pour melanger l'air primaire et l'air secondaire.

7. Appareil à induction selon l'une des revendications précédentes, **caractérisé en ce que** le dispositif d'induction (22) présente un caisson de distribution d'air (23) alimenté en air primaire et relié fluidiquement à une pluralité de buses d'induction (24).

8. Appareil à induction selon l'une des revendications précédentes, **caractérisé en ce qu'**une surface de sortie d'air secondaire (19) de l'échangeur de chaleur (18) est située latéralement par rapport aux buses d'induction (24).

9. Appareil à induction selon l'une des revendications précédentes, **caractérisé en ce que** l'élément de guidage d'air (11) s'étend, en position de base, parallèlement, ou à peu près parallèlement, à distance de la surface de sortie d'air secondaire (19) de l'échangeur de chaleur (18).

10. Appareil à induction selon l'une des revendications précédentes, **caractérisé en ce que**, en position maximale, l'une des zones d'extrémité (15) de l'élément de guidage d'air (11) est orientée en direction ou à peu près en direction des buses d'induction (24) et/ou se trouve - vu dans le sens d'écoulement de l'air primaire sortant des buses d'induction (24) - en avant d'au moins certaines des buses d'induction (24).

11. Procédé de ventilation et/ou de climatisation d'une pièce d'un bâtiment ou similaire, en utilisant un appareil à induction d'air selon l'une des revendications précédentes, **caractérisé en ce qu'**en déplaçant l'élément de guidage d'air (11), la zone de guidage d'air (26) située en aval du dispositif d'induction (22) est rétrécie ou élargie en section transversale (Q).

# Fig. 1

$V_{prim} + V_{sek}$

7

1

21

6

4

30

8

20

13

2

17

14

5

19

10,11,12

Q

25,26

16

27

15

3

31

24

$V_{sek}$

22

18

23

100%

9

$V_{prim}$

# Fig. 2

$V_{prim} + V_{sek}$ 50%

$V_{sek}$
50%

50%

$V_{prim}$

# Fig. 3

# Fig. 4

**IN DER BESCHREIBUNG AUFGEFÜHRTE DOKUMENTE**

**In der Beschreibung aufgeführte Patentdokumente**

- DE 3913306 A1